# EUROPÄISCHE PATENTSCHRIFT

(11) **EP 0 657 489 B1**
(45) Veröffentlichungstag und Bekanntmachung des Hinweises auf die Patenterteilung: **04.04.2001**
(21) Anmeldenummer: 94810672.9
(22) Anmeldetag: 28.11.1994
(51) Int. Cl.: C08J 3/22, C08J 9/40

(54) **Additivbeladenes, poröses Trägermaterial**
Porous carrier material loaded with additives
Matière de support poreuse chargée d'additifs

(30) Priorität: 08.12.1993 CH 365193
(43) Veröffentlichungstag der Anmeldung: 14.06.1995
(73) Patentinhaber: Cognis Deutschland GmbH, 40589 Düsseldorf (DE)
(72) Erfinder: Heese, Ulrich, CH-5243 Mülligen (CH); Salvel, Renato, CH-8052 Zürich (CH); Neumann, Wolfgang, CH-5225 Oberbözberg (CH)

(56) Entgegenhaltungen:
- EP-A- 0 197 631
- EP-A- 0 459 208
- DE-A- 2 737 745
- GB-A- 863 732
- US-A- 4 783 511
- CHEMICAL ABSTRACTS, vol. 81, no. 14, 7. Oktober 1974, Columbus, Ohio, US; abstract no. 78823n, TASHIO K ET AL 'Dispersible colored porous master batch' Seite 44 ;Spalte R ; & JP-A-48 043 370 (DAINICHISEIKA COLOR AND CHEMICAL MFG. CO., LTD.)
- DATABASE WPI Derwent Publications Ltd., London, GB; AN 93-261730[33] & JP-A-5 179 009 (NIPPON PETROCHEMICALS CO. LTD.) 20. Juli 1993

## Beschreibung

Die Erfindung bezieht sich ein Verfahren zur Herstellung eines schüttfähigen, porösen Trägermaterials aus wenigstens einem thermoplastischen Basispolymeren mit in die poröse Struktur eingebrachten Additiven. Weiter betrifft die Erfindung eine Verwendung des nach dem Verfahren hergestellten, beladenen, porösen Trägermaterials.

Polymere bestehen aus Molekülketten mit zahlreichen, sich praktisch endlos wiederholenden Bausteinen, welche sich in bezug auf die physikalischen Eigenschaften von den niedermolekularen Verbindungen unterscheiden, beispielsweise in bezug auf ihre hohe Zugfestigkeit und Elastizität.

In polymerisierte Kunststoffmassen werden bei industriellen Verfahren, je nach Weiterverarbeitung und Zweckbestimmung, geeignete Zusatzstoffe, sogenannte Additive, eingemischt. Die Basispolymere können so an individuelle Produkte und/ oder Bedürfnisse angepasst werden.

Zwischen Basispolymeren einerseits und flüssigen oder leicht schmelzbaren Additiven andrerseits besteht ein grosser Viskositätsunterschied, welcher bis zu einer Unverträglichkeit führen kann. In der Regel sind deshalb nur geringe Anteile von Additiven in Basispolymere einmischbar.

Zur Vermeidung von Dosierproblemen und zum Erreichen einer homogeneren Verteilung bevorzugen viele Kunststoffverarbeiter ein Konzentrat des jeweiligen Additivs in den Basispolymeren. Dabei wird ein Basispolymer oder eine Mischung von Basispolymeren mit einem oder mehreren Additiven erwärmt, aufgeschmolzen, gemischt und in eine schüttfähige Form überführt, beispielsweise in mit Additven beladene Trägermaterialien in Granulatform. Diese werden auch Additivmasterbatches genannt.

Für poröse oder mikroporöse Polymerstrukturen sind zahlreiche Herstellungsverfahren und verschiedenste Verwendungen bekannt. Als Herstellungsbeispiele seien die Phaseninversion, ein Nuklearbeschuss zur Einlagerung mikroporöser Festteilchen und die Zusammensinterung von kleinen mikroporösen Partikeln genannt.

Aus der US-A 4 247 498 ist ein Verfahren bekannt, mit welchem alle beliebigen synthetischen thermoplastischen Polymeren mikroporös hergestellt werden können. Die Polymere werden in einer mit ihnen verträglichen Flüssigkeit so lange und so weit aufgeheizt, bis sich eine homogene Lösung bildet. Diese wird in die gewünschte Form gebracht, in welcher sie abgekühlt wird, bis eine thermodynamisch ungleichgewichtige Flüssig/Flüssig-Phasentrennung einsetzt. Dabei entsteht ohne Einwirkung von Misch- oder sonstigen Scherkräften ein Feststoff, welcher ohne physische Degradation gehandhabt werden kann. Abschliessend wird mindestens ein wesentlicher Teil der Flüssigkeit aus dem entstandenden Feststoff entfernt, um das gewünschte mikroporöse Polymere zu bilden. Eine eng begrenzte Verteilung der Porengrösse, wie sie durch Quecksilberintrusionsporosimetrie gemessen wird, ist von wesentlicher Bedeutung und wird analytisch mit der Schärfefunktion "S" ausgedrückt. Im Rahmen der US,A 4 247 498 werden Polymere mit sphärischen Poren hergestellt, welche eine funktionelle Wirkflüssigkeit, wie Polymeradditive, enthalten. Die beladenen mikroporösen Polymere verhalten sich wie Feststoffe und können als solche verarbeitet werden. Zum Chargieren der mikroporösen Polymere kann jede organische Flüssigkeit verwendet werden, welche das Polymer nicht auflöst und mit diesem verträglich ist. Die funktionellen Wirkflüssigkeiten können durch Absorption, Austauschverfahren, Infusionsverfahren oder dgl. bekannte Verfahren eingebracht werden, auch unter Verwendung eines Zwischenproduktes.

Die Erfinder haben sich die Aufgabe gestellt, ein Verfahren der eingangs genannten Art zu schaffen, welches den Kunststoffverarbeitern bei der Verwendung des nach dem Verfahren hergestellten beladenen Trägermaterials eine Lösung für die Additivierung seiner Massenkunststoffe bietet. Weiter sollen mit dem Verfahren hergestellte, reaktive Additive materialschonender in die Form eines beladenen Masterbatches überführt werden können.

In bezug auf das Verfahren wird die Aufgabe erfindungsgemäss dadurch gelöst, dass
a) zu den Basispolymeren geeignete Aufschäummittel gegeben, die Masse geschmolzen, vor und/oder nach dem Schmelzen gemischt, und die Mischung unter Bildung des schüttfähigen, porösen Trägermaterials mit ellipsoiden Poren abgekühlt wird, und
b) das poröse Trägermaterial mit wenigstens einem Additiv versetzt und mit diesem bei einer unter dem Schmelzpunkt der Basispolymere, jedoch über dem Schmelzpunkt des Additivs liegenden Temperatur gemischt wird, mit der Maßgabe, daß Schritt a) in einem Extruder oder mehrwelligen Kneter-Extruder durchgeführt wird und daß in Schritt a) wenigstens zeltweise ein Inertes Gas in die Schmelze von Basispolymer und Aufschäumhilfe eingeleitet wird.

Spezielle und weiterbildende Ausführungsformen des Verfahrens sind Gegenstand von abhängigen Patentansprüchen.

Obwohl die bedeutenden technischen und wirtschaftlichen Fortschritte der Erfindung nur bei Anwendung beider Merfahrensstufen voll zur Geltung kommen, können die einzelnen Verfahrensschritte auch mit bekannten Verfahrensschritten oder Produkten kombiniert werden.

Vorzugsweise besteht das granalien- oder pelletförmige poröse Trägermaterial aus einem bei höheren Temperaturen formstabileren ersten Polymer und einem zweiten Polymer, welches das jeweilige Additiv in der Festphase des Trägers zusätzlich abspeichern kann. Vereinfachend kann bei derartigen Trägern von einem zweiphasigen Gebilde gesprochen werden, welches aus porösen Hohlräumen und einer Polymerphase besteht.

Die eingesetzten Basispolymere, welche erfindungsgemäss aufgeschäumt und mit einem Additiv beladen werden, können beispielsweise aus den folgenden vier Gruppen ausgewählt werden:
- Ein Homopolymer aus einem α-Olefin mit 2 - 8 Kohlenstoffatomen oder ein Copolymerisat von zwei entsprechenden α-Olefinen, vorzugsweise Copolymerisate aus Äthylen, auch als Homopolymerisat niedriger (LDPE), linear niedriger (LLDPE), sehr niedriger (VLDPE), ultraniedriger (ULDPE) oder hoher Dichte (HDPE), Propylen, auch als Homopolymerisat, 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2,3-Dimethyl-1-Butylen, 2-Äthyl-1-Butylen, und Mischungen davon
- Ein Copolymerisat von Äthylen mit 1-Butylen, 1-Hexylen, 1-Octylen oder 4-Methyl-1-Pentylen
- Ein Äthylenvinylacetat-Copolymerisat, ein Äthylenäthylacetat-Copolymerisat, ein Äthylenacrylisäurecopolymerisat und Mischungen davon oder mit Copolymeren von Äthylen und 1-Butylen, 1-Hexylen, 1-Octylen oder 4-Methyl-1-Pentylen
- Äthylenpropylengummi (EPDM), auch dienmodifiziert (EPR), ein Styrol-Butadien-Styrol-Copolymerisat (SBS), ein Styrol-Äthylen-Bytylen-Styrol-Copolymerisat (SEBS) und Mischungen davon.

Die Basispolymere liegen in der Praxis granalien- oder pelletförmig vor. Sie sind gut schütt- und rieselfähig und daher zum Mischen mit Aufschäumhilfen geeignet.

In der industriellen Praxis werden aus der breiten Palette von zur Verfügung stehenden Basispolymeren für poröse Trägermaterialien insbesondere Polyäthylen mit hoher Dichte (HDPE), niedriger (LDPE) oder linear niedriger (LLDPE) Dichte, Äthylvinylacetat-Copolymerisat (EVA) und Mischungen davon verwendet.

Als Aufschäumhilfe für Basispolymere eignen sich beispielsweise Azodicarbonamide und Zitronensäurederivate, z.B. Hydrocerol, welche vorzugsweise mit 0,1 bis 2 Gew.-%, bezogen auf die Basispolymere, zugegeben und eingemischt werden.

Die Mischung der Basispolymere mit geeigneten Aufschäumhilfen wird mit einem Extruder oder mit mehrwelligen Kneter-Extrudern aufgeschmolzen. Dabei entsteht eine poröse bis feinporöse, dreidimensionale Struktur mit entsprechend dem Mischungsgrad homogener Verteilung der Hohlräume. Die poröse Struktur ist dabei jedoch nicht mehr sphärisch, wie beispielsweise beim Produkt nach der US-A 4247498, sondern immer zu einer ellipsoiden Ausbildung der einzelnen Poren verformt. Das Verhältnis des längsten zum kürzesten Innendurchmesser liegt bei wenigstens etwa 2, insbesondere bei 3 bis 5.

Das poröse Extrudat wird mit an sich bekannten, geeigneten Einrichtungen in granulat- oder pelletförmiges Trägermaterial überführt, beispielsweise durch Stranggranulatoren. Das Porenvolumen liegt bevorzugt im Bereich von 50 bis 70 Vol.-%, bezogen auf das Gesamtvolumen.

Die Menge des zweckmässig fein versprüht eingeleiteten Gases beispielsweise Stickstoff richtet sich beispielsweise nach den Basispolymeren, dem Anteil an Aufschäumhilfe, der Temperatur und der Gesamtmenge der Schmelze.

Die granalien- oder pelletförmigen, porösen Trägermaterialien werden mit wenigstens einem flüssigen und/oder leicht schmelzbaren Additiv chargiert, indem sie in dafür geeigneten, an sich bekannten Mischaggregaten möglichst intensiv und homogen gemischt werden. Während dem Mischen füllen sich die Poren des Trägerkörpers mit flüssigem oder verflüssigtem Additiv. Beim Einsatz von leicht schmelzbaren Additiven muss die Temperatur zur Verflüssigung erhöht werden, bei viskosen Additiven ist dies von Vorteil, um sie dünnflüssiger zu machen. Die Aufnahmefähigkeit des Trägermaterials wird durch eine erhöhte Temperatur ganz allgemein verbessert, weshalb die Einmischtemperatur T_{M} für die Additive vorzugsweise im Bereich von 30 bis 140°C, insbesondere zwischen 40 und 90°C, liegt.

Das mit Additiven beladene poröse Trägermaterial, welches vorzugsweise wenigstens teilweise offenporig ausgebildet ist, wird wie erwähnt auch Additivmasterbatch genannt. Es wird vorzugsweise mit einem Beladungsgrad von 5 bis 80 Gew. - %, insbesondere 15 bis 60 Gew.-%, bezogen auf den beladenen Träger, chargiert, was ein entsprechend hohes Porenvolumen voraussetzt.

Poröse Trägermaterialien mit einem hohen Beladungsgrad bezüglich der Additive sind vorteilhaft, weil sie zum Erreichen eines bestimmten Additivgehalts im zu verarbeitenden Massenkunststoff nur in geringerer Menge zugegeben werden müssen.

Die eingemischten Additive sind beispielsweise Antistatika, Antischleiermittel, Haftmittel, Kalandrierhilfen, Formtrennmittel, Gleitmittel, Schmiermittel, Weichmacher, Duftmittel und/oder Flammschutzmittel.

Für funktionsbezogen eingesetzte Additive werden folgende Beispiele erwähnt:
- Gleitmittel: Säureamide
- Gleit- und Formtrennmittel: Neutralwachse, Fettsäureester des Glycerins, Stearinsäure, neutrale Esterwachse, Fettalkohole, Säureester von Fettalkoholen, Polyolester
- Haftmittel, Antischleiermittel (Antifogs): Neutrale Polyolester von Fettsäuren
- Antistatika, Antischleiermittel: Stickstoffhaltige Fettderivate; stickstoffreie nicht ionogene Verbindungen, z.B. Polyäthylenglycolester oder Polyäthylenglycoläther, Fettsäureester, Mono- oder Diglyceride, äthoxylierte Fettamine; anionenaktive Verbindungen, z.B. Alkylsulfonate, Alkylsulfate oder Alkylphosphate; kationenaktive Verbindungen, z.B. quartäre Ammoniumverbindungen.

Weitere chemische Verbindungstypen eignen sich für Additive, ohne Spezifikation eines besonderen Verwendungszweckes: Fettsäuren, Fettalkohol- Dicarbonsäureester, Fettsäuremonoamide, Fettsäurediamide (Amidwachse), Metallseifen, oligomere Fettsäureester (Fettsäurekomplexester), Fettalkohol-Fettsäureester, Wachssäuren, Wachssäureester, polare Polyäthylenwachse, unpolare Polyäthylenwachse und Paraffine.

Zur Durchführung des Verfahrens werden als Misch- und Schmelzaggregate, vorzugsweise an sich bekannte Extruder und/oder Mehrschneckenkneter-Extruder, eingesetzt, welche je nach erforderlichem Durchsatz dimensioniert sind und für die erste Verfahrensstufe, die Herstellung von porösem Trägermaterial, Mittel zur Herstellung von Granalien oder Pellets umfassen. Das bevorzugte Extrudieren führt zu einer Trägerstruktur mit einer ellipsoiden, porigen Struktur, was im Rahmen der vorliegenden Erfindung angestrebt wird.

Die erfindungsgemässe Verwendung des nach dem Verfahren hergestellten, beladenen, porösen Trägermaterials liegt in der Additivierung von Massenkunststoffen, insbesondere bei der Folienherstellung und beim Spritz- oder Formguss.

Im Folienbereich werden vorzugsweise Antistatika, Antischleiermittel, Haftmittel und/oder Kalandrierhilfen als Additive eingesetzt, im Spritz- und Formgussbereich zusätzlich Formtrennmittel und/oder Gleitmittel.

Zusammenfassend kann festgehalten werden, dass das erfindungsgemässe Verfahren zur Herstellung und Beladung von porösen Trägermaterialien, Additivmasterbatches genannt, den Verarbeitern von Kunststoffen eine ausserordentlich einfache und kostengünstige Lösung für die Additivierung ihrer Massenkunststoffe bietet, insbesondere für den Folien- und Spritzgussbereich. Das Verfahren erlaubt zudem, reaktive Additive materialschonend, mit geringer Temperatur- und Scherbelastung, in Form von Additivmasterbatches zu überführen.

## Patentansprüche

1. Verfahren zur Herstellung eines schüttfähigen, porösen Trägermaterials aus wenigstens einem thermoplastischen Basispolymeren mit in die poröse Struktur eingebrachten Additiven, dadurch gekennzeichnet, daß
a) zu den Basispolymeren geeignete Aufschäumhilfen gegeben, die Masse geschmolzen, vor und/oder nach dem Schmelzen gemischt, und die Mischung unter Bildung eines schüttfähigen, porösen Trägermaterials mit ellipsoïden Poren abgekühlt wird, und
b) das poröse Trägermaterial mit wenigstens einem Additiv versetzt und mit diesem bei einer unter dem Schmelzpunkt der Basispolymere, jedoch über dem Schmelzpunkt des Additivs liegenden Temperatur (T_{M}) gemischt wird,
mit der Maßgabe, daß Schritt a) in einem Extruder oder mehrwelligen Kneter-Extruder durchgeführt wird und daß in Schritt a) wenigstens zeitweise ein inertes Gas in die Schmelze von Basispolymer und Aufschäumhilfe eingeleitet wird.

2. Verfahren nach Anspruch 1, dadurch gekennzeichnet, daß als Basispolymere
- ein Homopolymer aus einem α-Olefin mit 2 - 8 Kohlenstoffatomen oder ein Copolymerisat von zwei entsprechenden α-Olefinen, auch als Homopolymerisat niedriger (LDPE), linear niedriger (LLDPE), sehr niedriger (VLDPE), ultraniedriger (ULDPE) und hoher Dichte (HDPE), Propylen, auch als Homopolymerisat, 1-Butylen, 1-Pentylen, 1-Hexylen, 1-Octylen, Isobutylen, 2-Methyl-1-Butylen, 3-Methyl-1-Pentylen, 4-Methyl-1-Pentylen, 2,3-Dimethyl-1-Butylen, 2-Äthyl-1-Butylen, und Mischungen davon, oder
- ein Copolymerisat von Äthylen mit 1-Butylen, 1-Hexylen, 1-Octylen oder 4-Methyl-1-Pentylen, oder
- ein Äthylenvinylacetat-Copolymerisat, ein Äthylenäthylacetat-Copolymerisat, ein Äthylenacrylisäurecopolymerisat und Mischungen davon oder mit Copolymeren von Äthylen und 1-Butylen, 1-Hexylen, 1-Octylen oder 4-Methyl-1-Pentylen, oder
- Äthylenpropylengummi (EPDM), auch dienmodifiziert (EPR), ein Styrol-Butadien-Styrol-Copolymerisat (SBS), ein Styrol-Äthylen-Butylen-Styrol-Copolymerisat (SEBS) und Mischungen davon
eingesetzt werden.

3. Verfahren nach Anspruch 1 oder 2, dadurch gekennzeichnet, daß man die Aufschäumhilfen wählt aus der Gruppe der Azodicarbonamide und der Zitronensäurederivate.

4. Verfahren nach einem der Ansprüche 1 bis 3, dadurch gekennzeichnet, daß die flüssigen und/oder leicht schmelzbaren Additive mit einem Beladungsgrad von 5 bis 80 Gew.-% bei einer Temperatur (T_{M}) von 30 bis 140 °C eingemischt werden.

5. Verfahren nach einem der Ansprüche 1 bis 4, dadurch gekennzeichnet, daß Antistatika, Antischleiermittel, Haftmittel, Kalandrierhilfen, Formtrennmittel, Gleitmittel, Schmiermittel, Weichmacher, Duftmittel und/oder Flammschutzmittel als Additive eingemischt werden.

6. Verfahren nach einem der Ansprüche 1 bis 5, dadurch gekennzeichnet, daß als Additive wenigstens eine der Komponenten Fettalkohole, Fettsäuren, Fettsäureester, stickstoffhaltige Fettderivate, Fettsäureamide, Wachssäuren, Wachssäureester, Paraffine, Neutralwachse, Metallseifen; Säureester von Fettalkoholen, Polyolester, Fettalkohol-Fettsäureester, Fettsäureester des Glycerins, neutrale Polyolester von Fettsäuren, Fettalkohol-Dicarbonsäureester, Fettalkohol-Fettsäureester, Stearinsäure, oligomere Fettsäureester, Fettsäuremonoamide, Fettsäurediamide; neutrale Esterwachse, polare Polyäthylenwachse, unpolare Polyäthylenwachse; stickstofffreie nicht ionogene Verbindungen, Polyäthylenglycolester, Polyäthylenglycoläther, Monoglyceride, Diglyceride, äthoxylierte Fettamine; anionenaktive Verbindungen, Alkylsulfonate, Alkylsulfate, Alkylphospate; kationenaktive Verbindungen und quartäre Amoniumverbindungen eingesetzt werden.

7. Verwendung des nach dem Verfahren nach einem der Ansprüche 1 bis 6 hergestellten, beladenen porösen Trägermaterials zur Additivierung von Massenkunststoffen, insbesondere bei der Folienherstellung und beim Spritz-oder Formguss.

## Claims

1. A process for the production of a pourable, porous carrier material of at least one thermoplastic base polymer with additives introduced into the porous structure, characterized in that
a) suitable foaming aids are added to the base polymer, the whole is melted, mixed before and/or after melting and the resulting mixture is cooled to form a pourable, porous carrier material with ellipsoidal pores and
b) at least one additive is added to and mixed with the porous carrier material at a temperature (T_{M}) below the melting point of the base polymer, but above the melting point of the additive, with the proviso that step a) is carried out in an extruder or multiple-screw kneader/extruder and that an inert gas is introduced at least periodically into the melt of base polymer and foaming aid in step a).

2. A process as claimed in claim 1, characterized in that the base polymer is selected from
- a homopolymer of an α-olefin containing 2 to 8 carbon atoms or a copolymer of two corresponding α-olefins, including homopolymers of low density (LDPE), linear low density (LLDPE), very low density (VLDPE), ultra low density (ULDPE) and high density (HDPE), propylene, including homopolymers, 1-butylene, 1-pentylene, 1-hexylene, 1-octylene, isobutylene, 2-methyl-1-butylene, 3-methyl-1-pentylene, 4-methyl-1-pentylene, 2,3-dimethyl-1-butylene, 2-ethyl-1-butylene and mixtures thereof or
- a copolymer of ethylene with 1-butylene, 1-hexylene, 1-octylene or 4-methyl-1-pentylene or
- an ethylene/vinyl acetate copolymer, an ethylene/ethyl acetate copolymer, an ethylene/acrylic acid copolymer and mixtures thereof or with copolymers of ethylene and 1-butylene, 1-hexylene, 1-octylene or 4-methyl-1-pentylene, or
- ethylene/propylene rubber (EPDM), including diene-modified types (EPR), a styrene/butadiene/styrene copolymer (SBS), a styrene/ethylene/butylene/styrene copolymer (SEBS) and mixtures thereof.

3. A process as claimed in claim 1 or 2, characterized in that the foaming acids are selected from the group of azodicarbonamides and citric acid derivatives.

4. A process as claimed in any of claims 1 to 3, characterized in that the liquid and/or low-melting additives charged to a degree of 5 to 80% by weight are mixed in at a temperature (T_{M}) of 30 to 140°C.

5. A process as claimed in any of claims 1 to 4, characterized in that antistatic agents, antifogging agents, coupling agents, calendering aids, mould release agents, lubricants, plasticizers, fragrances and/or flameproofing agents are mixed in as additives.

6. A process as claimed in any of claims 1 to 5, characterized in that at least one of the components fatty alcohols, fatty acids, fatty acid esters, nitrogen-containing fatty derivatives, fatty acid amides, wax acids, wax acid esters, paraffins, neutral waxes, metal soaps; acid esters of fatty alcohols, polyol esters, fatty alcohol/fatty acid esters, fatty acid esters of glycerol, neutral polyol esters of fatty acids, fatty alcohol/dicarboxylic acid esters, fatty alcohol/fatty acid esters, stearic acid, oligomeric fatty acid esters, fatty acid monoamides, fatty acid diamides; neutral ester waxes, polar polyethylene waxes, nonpolar polyethylene waxes; nitrogen-free nonionic compounds, polyethylene glycol esters, polyethylene glycol ethers, monoglycerides, diglycerides, ethoxylated fatty amines; anionic compounds, alkyl sulfonates, alkyl sulfates, alkyl phosphates; cationic compounds and quaternary ammonium compounds is used as an additive.

7. The use of the charged porous material produced by the process claimed in any of claims 1 to 6 for introducing additives into mass-produced plastics, more particularly in the manufacture of film and in moulding or injection moulding.

## Revendications

1. Procédé de production d'un matériau de support poreux apte à l'écoulement, à base d'au moins un polymère de base thermoplastique, avec des additifs incorporés dans la structure poreuse,
caractérisé en ce que
a) on ajoute aux polymères de base des agents de moussage adéquats, on fond la masse, on mélange avant et/ou après la fusion et on refroidit le mélange tout en formant le matériau support poreux, apte à l'écoulement ayant des pores ellipsoïdaux, et
b) on additionne le matériau support poreux à au moins un additif et on mélange à celui-ci à une température qui se situe en dessous du point de fusion des polymères de base, mais cependant au-dessus du point de fusion de l'additif,
avec la restriction que l'étape a) est effectuée dans une extrudeuse ou dans une extrudeuse-malaxeuse à plusieurs axes et qu'à l'étape a) on introduit au moins par instants un gaz inerte dans le produit de fusion du polymère de base et d'auxiliaire de moussage.

2. Procédé selon la revendication 1,
caractérisé en ce que
comme polymère de base on met en oeuvre,
- un homopolymère à base d'une α-oléfine ayant de 2 à 8 atomes de carbone ou un copolymérisat de deux α-oléfines correspondantes, de préférence des copolymérisats à base d'éthylène aussi sous forme d'homopolymérisat de basse densité (LDPE), linéaire de basse densité (LLDPE), de très basse densité (VLDPE), d'ultra basse densité (ULDPE) ou de haute densité (HDPE), de propylènes aussi sous forme d'homopolymérisat, 1-butylène, 1-pentylène, 1-hexylène, 1-octylène, isobutylène, 2-methyl-1-butylène, 3-methyl-1-pentylène, 4-méthyl-1-pentylène, 2,3-diméthyl-1-butylène, 2-éthyl-1-butylène et les mélanges de ceux-ci, ou
- un copolymérisat d'éthylène avec le 1-butylène, le 1-hexylène, le 1-octylène ou le 4-méthyl-1-pentylène, ou
- un copolymérisat éthylène/acétate de vinyle, un copolymérisat éthylène/acétate d'éthyle, un copolymérisat éthylène/acide acrylique et des mélanges de ceux-ci avec des copolymères d'éthylène et de 1-butylène, de 1-hexylène, de 1-octylène ou de 4-méthyl-1-pentylène, ou
- des caoutchoucs éthylène/propylène (EPDM), également modifiés par des diènes (EPR), un copolymérisat styrène/butadiène/styrène (SBS), un copolymérisat styrène/éthylène/butylène/styrène (SEBS) et les mélanges de ceux-ci.

3. Procédé selon la revendication 1 ou 2,
caractérisé en ce qu'
on choisit les auxiliaires de moussage, dans le groupe des azodicarbonamides et des dérivés de l'acide citrique.

4. Procédé selon l'une quelconque des revendications 1 à 3,
caractérisé en ce qu'
on introduit en mélange les additifs liquides et/ou facilement fusibles avec un degré de chargement allant de 5 à 80 % en poids à une température (T_{M}) allant de 30 à 140°C.

5. Procédé selon l'une quelconque des revendications 1 à 4,
caractérisé en ce qu'
on introduit en mélange des agents antistatiques, des agents anti-trouble, des agents d'adhésion, des auxiliaires de calandrage, des agents de démoulage, des agents lubrifiants, des agents de graissage, des agents plastifiants, des agents odorants, et/ou des agents ignifuges en tant qu'additifs.

6. Procédé selon l'une quelconque des revendications 1 à 5,
caractérisé en ce qu'
on met en oeuvre comme additifs au moins un des composants : alcools gras, acides gras, esters d'acide gras, dérivé gras contenant de l'azote, amides d'acide gras, acides de cire, ester d'acide de cire, paraffines, cires neutres, savons métalliques ; esters d'acide d'alcool gras, esters de polyol, esters d'alcool gras et d'acide gras, ester d'acide gras et du glycérol, ester neutre de polyol d'acides gras, esters d'alcools gras d'acide dicarboxylique, esters d'alcool gras et d'acide gras, acide stéarique, esters d'acide gras oligomères, monoamides d'acide gras, diamides d'acide gras ; esters de cire neutres, cires de polyéthylène polaires, cires de polyéthylène non polaires ; composés non ionogènes dépourvus d'azote, esters de polyéthylèneglycol, éthers de polyéthylèneglycol, monoglycérides, diglycérides, amines grasses éthoxylées ; composés à anion actif, alkylsulfonates, alkylsulfates, alkylphosphates ; composés à cation actif, et composés d'ammonium quaternaires.

7. Utilisation du matériau de support poreux, chargé, produit selon le procédé selon l'une quelconque des revendications 1 à 6, en vue de l'addition de matières plastiques en masse, en particulier dans la production de feuilles et dans le moulage par injection ou à modèle perdu.
